# EUROPEAN PATENT APPLICATION

(11) **EP 3 751 402 A1**
(43) Date of publication of application: **16.12.2020**
(21) Application number: 19179583.0
(22) Date of filing: 12.06.2019
(51) Int. Cl.: G06F 3/0481, G06F 3/16

(54) **AN APPARATUS AND METHOD FOR GENERATING A PERSONALIZED VIRTUAL USER INTERFACE**

(71) Applicant: Koninklijke Philips N.V., 5656 AG Eindhoven (NL)
(72) Inventor: WALDNER, Roland, 5656 AE Eindhoven (NL)
(74) Representative: de Haan, Poul Erik

(57) **Abstract**

There is provided a computer-implemented method for generating a personalized virtual user interface for a user. The method comprises acquiring (202) information to be delivered to the user, acquiring (204) data indicative of a preferred communication style of the user, determining (206) a communication class for the user based on the acquired data, wherein the communication class comprises one or more rules, each of the one or more rules being associated with one of: an amount of the acquired information to deliver to the user and a format in which the acquired information is to be delivered to the user, and generating (208), based on the determined communication class for the user, a virtual user interface for delivering at least part of the acquired information to the user.

## Description

### FIELD OF THE INVENTION

The present disclosure relates to an apparatus and method for generating a personalized virtual user interface.

### BACKGROUND OF THE INVENTION

Digitalization and connectivity have become more and more common, and many electronic devices are now provided with application software (app) or other types of online software, or even software employing artificial intelligence (AI). In the case of most of these types of software, it is necessary to perform user registration in order for a user to use the functionalities of the software. However, even with user registration, these software typically do not tailor to the individual characteristics of each user. The amount of information as well as the format in which the information is delivered to users are standardized and are not actually adjustable for different users.

### SUMMARY OF THE INVENTION

As noted above, there are a number of disadvantages associated with the currently available approaches for providing a virtual user interface to users. For example, different users may have different personalities, preferences, and requirements, but the currently available techniques for generating and providing virtual user interfaces do not take into account of these important differences as they typically only present a standardized virtual user interface to all users. As a result, user-friendliness and user satisfaction are compromised. In an exemplary context in which the virtual user interface is designed for users to follow a long-term program (e.g. healthcare program or nutrition program), the users may feel frustrated, confused, or discouraged due to the rigidity of the virtual user interface.

In the field of psychology, there has been many developed approaches for categorizing and indicating different psychological preferences in how people perceive their surroundings and make decisions, examples including the Myers-Briggs type indicator, the C.A.R.E. personality profile, or the Team Management Profile. Each personality type categorized using these approaches may have specific preferences for achieving optimized communication. For example, a certain personality type may prefer very detailed descriptions and instructions, while another personality type may prefer short succinct descriptions and instructions. Therefore, the effectiveness and the user-friendliness of a virtual user interface can be improved if such virtual user interface were to take into account the preferred communication styles associated with these different personality types. For this reason, it would be advantageous to provide an improved method for generating a personalized virtual user interface.

To better address one or more of the concerns mentioned earlier, in a first aspect, a computer-implemented method for generating a personalized virtual user interface for a user is provided. The method comprises: acquiring information to be delivered to the user; acquiring data indicative of a preferred communication style of the user; determining a communication class for the user based on the acquired data, wherein the communication class comprises one or more rules, each of the one or more rules being associated with one of: an amount of the acquired information to deliver to the user and a format in which the acquired information is to be delivered to the user; and generating, based on the determined communication class for the user, a virtual user interface for delivering at least part of the acquired information to the user.

In some embodiments, the acquired data indicative of a preferred communication style of the user of the user may comprise at least one of: an age of the user, a gender of the user, a nationality of the user, a current health condition of the user, a personality type of the user, and a current mood of the user.

In some embodiments, generating a virtual user interface may comprise acquiring a standard virtual user interface and adjusting the standard virtual user interface based on the one or more rules in the determined communication class.

In some embodiments, a rule associated with a format in which the acquired information is to be delivered to the user may dictate one of: one or more visual components of the virtual user interface, a tone of voice in which the acquired information is to be delivered to the user, and a level of detail in which the acquired information is to be delivered to the user.

In some embodiments, the method may further comprise receiving a user input, wherein acquiring the information to be delivered to the user comprises generating feedback based on the received user input.

In some embodiments, generating a virtual user interface may comprise extracting a part of the acquired information based on the determined communication class. In these embodiments, the generated virtual user interface may deliver the extracted part of the acquired information.

In some embodiments, acquiring data indicative of a preferred communication style of the user may comprise receiving user input associated with at least one of an interview and a personality test.

In some embodiments, the method may further comprise receiving a first user input; and training, based on the received first user input, a predictive model for determining one or more new rules. In these embodiments, the one or more new rules may be associated with one of an amount of the acquired information to deliver to the user and a format in which the acquired information is to be delivered to the user. Moreover, in these embodiments, the method may further comprise receiving a second user input; using the predictive model to determine a new rule for the user based on the received second user input; and adjusting the virtual user interface based on the determined new rule. In these embodiments, the new rule may be associated with one of an amount of the acquired information to deliver to the user and a format in which the acquired information is to be delivered to the user.

In some embodiments, the method may further comprise replacing one or more existing rules in the determined communication class for the user with the determined new rule, or adding the determined new rule to the determined communication class.

In a second aspect, there is provided a computer program product comprising a computer readable medium, the computer readable medium having computer readable code embodied therein, the computer readable code being configured such that, on execution by a suitable computer or processor, the computer or processor is caused to perform the method as described herein.

In a third aspect, there is provided an apparatus for generating a personalized virtual user interface for a user. The apparatus comprises a processor configured to: acquire information to be delivered to the user; acquire data indicative of a preferred communication style of the user; determine a communication class for the user based on the acquired data, wherein the communication class comprises one or more rules, each of the one or more rules being associated with one of an amount of the acquired information to deliver to the user and a format in which the acquired information is to be delivered to the user; and generate, based on the determined communication class for the user, a virtual user interface for delivering at least part of the acquired information to the user.

According to the aspects and embodiments described above, the limitations of existing techniques are addressed. In particular, the above-described aspects and embodiments enable a personalized virtual user interface which caters to the preferences and requirements of a user to be generated. The embodiments described above offer a versatile, convenient, and user-oriented approach to the provision of virtual user interfaces. In this way, the embodiments as described in the present disclosure improve user experience and satisfaction during interaction with an application software, e.g. a virtual assistant, which would in turn lead to an increased effectiveness of the intended purpose(s) of the application software. For example, an application software designed to assist a user in achieving their nutrition goals would be more effective if the interaction between the user and the system (on which the application software is implemented) takes into account the preferred communication style of the user.

There is thus provided an improved method and apparatus for generating a personalized virtual user interface. These and other aspects of the disclosure will be apparent from and elucidated with reference to the embodiment(s) described hereinafter.

### BRIEF DESCRIPTION OF THE DRAWINGS

For a better understanding of the embodiments, and to show more clearly how they may be carried into effect, reference will now be made, by way of example only, to the accompanying drawings, in which:
Fig. 1 is a block diagram of an apparatus for generating a personalized virtual user interface for a user, according to an embodiment; and
Fig. 2 is a flowchart illustrating a method for generating a personalized virtual user interface for a user, according to an embodiment.

### DETAILED DESCRIPTION OF EMBODIMENTS

As noted above, there is provided an improved apparatus and a method of operating the same which addresses the existing problems.

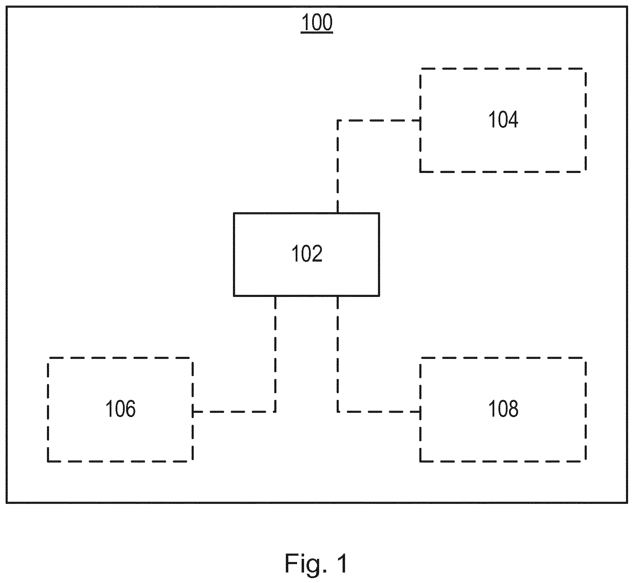

**Fig. 1** shows a block diagram of an apparatus 100 according to an embodiment, which can be used for generating a personalized virtual user interface. In some embodiments, the apparatus 100 may be a consumer device, such as a kitchen blender, a refrigerator, a smart TV, a smart speaker etc. Although the operation of the apparatus 100 is described below in the context of a single user, it will be appreciated that the apparatus 100 is capable of generating individual personalized virtual user interfaces for a plurality of users. Furthermore, the apparatus 100 is capable of generating personalized virtual user interfaces for a number of different applications. For example, the apparatus 100 can generate personalized virtual user interfaces for a plurality of users in an application software designed to provide personalized nutrition information.

As illustrated in Fig. 1, the apparatus comprises a processor 102 that controls the operation of the apparatus 100 and that can implement the method described herein. The processor 102 can comprise one or more processors, processing units, multi-core processor or modules that are configured or programmed to control the apparatus 100 in the manner described herein. In particular implementations, the processor 102 can comprise a plurality of software and/or hardware modules that are each configured to perform, or are for performing, individual or multiple steps of the method described herein.

Briefly, the processor 102 is configured to acquire information to be delivered to the user, and acquire data indicative of a preferred communication style of the user. The processor 102 is then configured to determine a communication class for the user based on the acquired data. The communication class comprises one or more rules, each of the one or more rules being associated with one of an amount of the acquired information to deliver to the user and a format in which the acquired information is to be delivered to the user. The processor 102 is further configured to generate, based on the determined communication class for the user, a virtual user interface for delivering at least part of the acquired information to the user.

In some embodiments, the apparatus 100 may further comprise at least one user interface 104. Alternative or in addition, at least one user interface 104 may be external to (i.e. separate to or remote from) the apparatus 100. For example, at least one user interface 104 may be part of another device. In the context of the present disclosure, a "user interface" is one that is at least partly implemented as a tangible component, as opposed to a "virtual user interface" which is implemented as software. A user interface 104 may be for use in providing a user of the apparatus 100 with information resulting from the method described herein. Alternatively or in addition, a user interface 104 may be configured to receive a user input. For example, a user interface 104 may allow a user of the apparatus 100 to manually enter instructions, data, or information. In these embodiments, the processor 102 may be configured to acquire the user input from one or more user interfaces 104.

A user interface 104 may be any user interface that enables the rendering (or output or display) of information to a user of the apparatus 100. Alternatively or in addition, a user interface 104 may be any user interface that enables a user of the apparatus 100 to provide a user input, interact with and/or control the apparatus 100. For example, the user interface 104 may comprise one or more switches, one or more buttons, a keypad, a keyboard, a touch screen or an application (for example, on a tablet or smartphone), a display screen, a graphical user interface (GUI) or other visual rendering component, one or more speakers, one or more microphones or any other audio component, one or more lights, a component for providing tactile feedback (e.g. a vibration function), or any other user interface, or combination of user interfaces.

In some embodiments, the apparatus 100 may comprise a memory 106. Alternatively or in addition, one or more memories 106 may be external to (i.e. separate to or remote from) the apparatus 100. For example, one or more memories 106 may be part of another device. A memory 106 can be configured to store program code that can be executed by the processor 102 to perform the method described herein. A memory can be used to store information, data, signals and measurements acquired or made by the processor 102 of the apparatus 100. For example, a memory 106 may be used to store (for example, in a local file) context information (e.g. nutrition information in the context of an application software designed to provide personalized nutrition information), a plurality of predefined communication classes, and/or a plurality of predefined rules for associating with communication class(es). The processor 102 may be configured to control a memory 106 to store this information.

In some embodiments, the apparatus 100 may comprise a communications interface (or circuitry) 108 for enabling the apparatus 100 to communicate with any interfaces, memories and/or devices that are internal or external to the apparatus 100. The communications interface 108 may communicate with any interfaces, memories and/or devices wirelessly or via a wired connection. For example, the communications interface 108 may communicate with one or more user interfaces 104 wirelessly or via a wired connection. Similarly, the communications interface 108 may communicate with the one or more memories 106 wirelessly or via a wired connection.

It will be appreciated that Fig. 1 only shows the components required to illustrate an aspect of the apparatus 100 and, in a practical implementation, the apparatus 100 may comprise alternative or additional components to those shown.

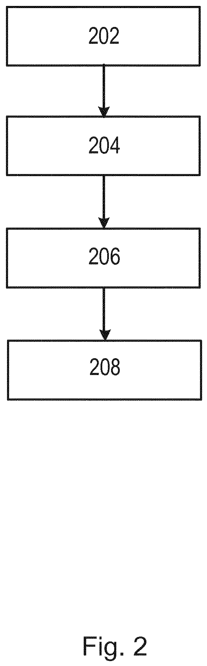

**Fig. 2** illustrates a computer-implemented method for generating a personalized virtual user interface for a user according to an embodiment. The illustrated method can generally be performed by or under the control of processor 102 of the apparatus 100 as described with reference to Fig. 1. The method described herein may be performed for generating a personalized virtual user interface for a number of different applications, e.g. an application software designed to provide personalized nutrition information. Alternatively or in addition, the method described herein may be performed for generating a personalized virtual user interface for a virtual assistant software (e.g. one that is configured to provide a variety of information including personal scheduling information, weather information, travel information, etc.).

With reference to Fig. 2, at block 202, information to be delivered to the user is acquired. Specifically, the information to be delivered to the user may be acquired by the processor 102 of the apparatus 100 from the memory 106. The information to be delivered to the user may comprise information associated with an objective of the application software for which the personalized virtual user interface is to be generated in the method. For example, for an application software designed to provide personalized nutrition information, the information to be delivered to the user may comprise nutrition information personalized for the user. As another example, for an application software designed to provide recipe information, the information to be delivered to the user may comprise information such as the plurality of food ingredients of a selected recipe and the recipe steps/instructions of the selected recipe. As yet another example, for an application software designed to provide travel information, the information to be delivered to the user may comprise instructions for taking public transport from one location to another location.

Although not illustrated in Fig. 2, in some embodiments the method may comprise receiving a user input. In these embodiments, acquiring the information to be delivered to the user at block 202 may comprise generating feedback based on the received user input. In these embodiments, the generated feedback may be considered as the acquired information to be delivered to the user. For example, the generated feedback may be information requested or selected by the user via user input (e.g. recipe information corresponding to a recipe selected by the user). As another example, in the context of an application software designed to provide healthcare coaching, the generated feedback may be motivational phrases and/or healthcare suggestions based on the user's health condition (which is received via user input).

Returning to Fig. 2, at block 204, data indicative of a preferred communication style of the user is acquired. Specifically, the data indicative of the preferred communication style of the user may be acquired by the processor 102 of the apparatus 100.

In some embodiments, acquiring data indicative of a preferred communication style of the user may comprise receiving user input associated with at least one of an interview and a personality test. A questionnaire may be provided in this regard for prompting the user to provide relevant user input associated with the interview and/or the personality test. For example, in some embodiments the user input(s) may be associated with answers for a Myers-Briggs questionnaire (e.g. an answer for the question "Are you more of a detail-oriented person than a big picture person?"). This user input may be received via the user interface 104 of the apparatus 100, for example via a touch screen as the user marks the answers to the questions of the questionnaire, or via a microphone as the user provides voice commands corresponding to the answers to the questions of the questionnaire which can then be processed by the processor 102 using speech recognition techniques.

Alternatively or in addition, in some embodiments, the acquired data indicative of a preferred communication style of the user of the user may comprise at least one of: an age of the user, a gender of the user, a nationality of the user, a current health condition of the user, a personality type of the user, and a current mood of the user. For example, a younger user (e.g. 7 year old child) may prefer a more simplistic style of communication, i.e. simple words and short sentences, while an older user (e.g. a 70 year old man) may prefer bigger font in the descriptions and instructions. As another example, a user with hearing difficulties (as indicated in their current health condition) may prefer an increased audio volume when being provided with audio descriptions and instructions. Different nationalities of users may also prefer different styles of communication, including language preferences and degrees of conciseness, etc.

In some embodiments, the data indicative of a preferred communication style of the user may be acquired directly or indirectly via an interaction between the user and the apparatus 100. For example, the apparatus 100 may be a smart speaker configured to provide virtual assistant functionalities based on voice interaction. In this case, the processor 102 of the apparatus 100 may be configured to acquire the data indicative of a preferred communication style based on the voice interaction between the user and the apparatus 100. For example, speech recognition techniques may be employed to determine the gender of the user and/or the nationality of the user based on a previous voice interaction, without requiring the user to explicitly indicate their gender and/or nationality via specific user inputs.

Returning to Fig. 2, at block 206, a communication class for the user is determined based on the data acquired at block 204. The determined communication class comprises one or more rules, and each of the one or more rules is associated with one of an amount of the acquired information to deliver to the user and a format in which the acquired information is to be delivered to the user.

In some embodiments, a plurality of predefined communication classes may be stored in the memory 106 of the apparatus 100, and at block 206 the determination of a communication class for the user may comprise selecting one of the plurality of predefined communication classes stored in the memory 106. This selection may be performed by the processor 102 of the apparatus 100. Alternatively, determination of a communication class for the user at block 206 may comprise generating a new communication class for the user based on the data acquired at block 204 and/or based on the plurality of predefined communication classes stored in the memory 106. In these embodiments, a plurality of predefined rules (each associated with one of an amount of acquired information to deliver to the user and a format in which the information is to be delivered to the user) may be stored in the memory 106. The generation of the new communication class for the user may comprise selecting one or more of the plurality of predefined rules stored in the memory 106.

In some embodiments, a rule associated with a format in which the acquired information is to be delivered to the user dictates one of: one or more visual components of the virtual user interface, a tone of voice (e.g. gentle vs strict) in which the acquired information is to be delivered to the user, and a level of detail in which the acquired information is to be delivered to the user. For example, a determined communication class for a user may include a rule dictating a maximum number of words or visual components (e.g. virtual buttons) to present to the user at a time because the data acquired at block 204 indicates that the user does not like to have an overloaded display. As another example, a determined communication class for another user may include a rule indicating that the maximum available visual components are to be presented to the user as well as a rule indicating that virtual pop-up menus are to be provided to explain the functions of the application, because the data acquired at block 204 indicates that the user likes to be provided with as many details as possible. As yet another example, a determined communication class for another user may include a rule indicating the minimum font size because the data acquired at block 204 indicates that the user is visually impaired.

Returning to Fig. 2, at block 208, a virtual user interface for delivering at least part of the acquired information to the user is generated based on the communication class determined at block 206. Specifically, the virtual user interface may be generated by the processor 102 of the apparatus 100.

In some embodiments, generating a virtual user interface at block 208 may comprise acquiring a standard virtual user interface, and adjusting the standard virtual user interface based on the one or more rules in the communication class. For example, a rule in the communication class determined at block 206 may dictate a maximum number of visual components to be presented to the user at a time. In this example, the method may comprise reducing the visual components in the standard virtual user interface according to the maximum number of visual components in the rule. The reduction of visual components may be based on a relative degree of relevance and/or importance of each of the original visual components in the standard virtual user interface.

In some embodiments, generating a virtual user interface at block 208 may comprise extracting a part of the acquired information based on the communication class determined at block 206. In these embodiments, the generated virtual user interface may deliver the extracted part of the acquired information. Moreover, the method may further comprise classifying the information acquired at block 202 into a plurality of groups and determining a degree of relevance and/or importance for each group of information. The degree of relevance and/or importance may be performed based on keywords contained in the information. For example, cosine similarity techniques may be employed to determine a degree of relevance and/or importance of an information group and such techniques can be used with respect to a known set of keywords. In embodiments where the information acquired at block 202 is classified into a plurality of groups and where one of the one or more rules in the communication class determined at block 206 is associated with reducing an amount of information to deliver to the user (e.g. if a rule dictates that only critical information is to be delivered to the user), the extraction of the acquired information may comprise extracting at least one information group based on a comparison between the respective degrees of relevance and/or importance with a predetermined threshold.

By way of an example in the context of a software application designed to provide recipe information to users, the information to be delivered to the user acquired at block 202 may contain a list of food ingredients, a quantity associated with each food ingredient, a plurality of recipe steps which may include setting(s) for cooking device(s) (e.g. a temperature for a cooking oven) and a duration of cooking (e.g. "cook for 30 minutes in the oven"). In this example, based on the one or more rules in the communication class determined at block 206, in some cases only a part of this recipe information may be extracted for delivery to the user. For instance, if a rule in the determined communication class for a user dictates that only a list of food ingredients and a brief indication of cooking device setting(s) are to be provided to the user, or if a rule in the determined communication class for a user dictates that only "key" or "essential" information (i.e. only information groups with a degree of relevance/importance higher than a predetermined threshold, for example the list of food ingredients and the brief indication of cooking device setting(s)) are to be provided to the user, then the virtual user interface generated at block 208 may be used for delivering only these more relevant parts of the recipe information to deliver to the user. In contrast, if a rule in the communication class for a user dictates that all recipe information including detailed recipe step instructions (e.g. precise oven temperatures) is to be provided to for the user, then the virtual user interface generated at block 208 may be used for delivering all the recipe information of the certain recipe to the user.

In some embodiments, the information to be delivered to the user may be acquired at block 202 from a memory 106 of the apparatus, and the memory 106 may store a plurality of predefined sentences and phrases relevant to the context of the application software for which the personalized virtual user interface is to be generated. In these embodiments, the generation of the virtual user interface at block 208 may comprise extracting relevant sentences and/or phrases from the memory 106 according to the one or more rules the communication class determined at block 206 for delivering to the user. For example, if a rule in the determined communication class for the user dictates a maximum number of words in a sentence (which is both a limitation with respect to the amount of acquired information to deliver to the user and a limitation with respect to the format in which the acquired information is to be delivered to the user), only sentences satisfying such criterion would be extracted and subsequently delivered to the user via the generated virtual user interface.

Although not illustrated in Fig. 2, in some embodiments the method may further comprise receiving a first user input, and training, based on the received first user input, a predictive model for determining one or more new rules, wherein the one or more new rules are associated with one of an amount of the acquired information to deliver to the user and a format in which the acquired information is to be delivered to the user. In these embodiments, the method may further comprise receiving a second user input, and using the predictive model to determine a new rule for the user based on the received second user input. The determined new rule may be associated with one of: an amount of information to deliver to the user and a format in which the acquired information is to be delivered to the user. Additionally, the method may further comprise adjusting the virtual user interface based on the determined new rule. Moreover, the method may further comprise replacing one or more existing rules in the determined communication class for the user with the determined new rule, or adding the determined new rule to the determined communication class. The training of the predictive model for determining one or more new rules may be based on machine learning techniques. Moreover, the predictive model may be a convolution deep learning model. By training the predictive model for determining one or more new rules, more specific rules that are tailored to a user's preferences and requirements can be applied to their communication class so as to further increase the effectiveness of the delivery of information to the user. In addition, the trained predictive model can enable more user-oriented and/or target-oriented new rule(s) to be determined, since the new rule(s) would be determined based on previous user input that may contain information indicative of the preferences and requirements of the user.

As mentioned above with respect to block 204, in some embodiments acquiring data indicative of a preferred communication style of the user may comprise receiving user input associated with at least one of an interview and a personality test. In these embodiments, the method may further comprise requesting user input associated with at least one of an interview and a personality test based on the new rule determined using the predictive model. For example, the determined new rule may indicate that the user prefers natural conversation as a way of providing new information and requesting user input. In this example, instead of simply presenting the question "do you find it easier to gain knowledge through hands-on experience than from books or manuals?" in a Myers-Briggs personality test, the processor 102 may be configured to incorporate this question in a natural conversation during an interaction with the user, or to perform inference to deduce the answer to the question based on past user interactions.

There is thus provided an improved method and apparatus for generating a virtual user interface, which overcomes the existing problems.

There is also provided a computer program product comprising a computer readable medium, the computer readable medium having computer readable code embodied therein, the computer readable code being configured such that, on execution by a suitable computer or processor, the computer or processor is caused to perform the method or methods described herein. Thus, it will be appreciated that the disclosure also applies to computer programs, particularly computer programs on or in a carrier, adapted to put embodiments into practice. The program may be in the form of a source code, an object code, a code intermediate source and an object code such as in a partially compiled form, or in any other form suitable for use in the implementation of the method according to the embodiments described herein.

It will also be appreciated that such a program may have many different architectural designs. For example, a program code implementing the functionality of the method or system may be sub-divided into one or more sub-routines. Many different ways of distributing the functionality among these sub-routines will be apparent to the skilled person. The sub-routines may be stored together in one executable file to form a self-contained program. Such an executable file may comprise computer-executable instructions, for example, processor instructions and/or interpreter instructions (e.g. Java interpreter instructions). Alternatively, one or more or all of the sub-routines may be stored in at least one external library file and linked with a main program either statically or dynamically, e.g. at run-time. The main program contains at least one call to at least one of the sub-routines. The sub-routines may also comprise function calls to each other.

An embodiment relating to a computer program product comprises computer-executable instructions corresponding to each processing stage of at least one of the methods set forth herein. These instructions may be sub-divided into sub-routines and/or stored in one or more files that may be linked statically or dynamically. Another embodiment relating to a computer program product comprises computer-executable instructions corresponding to each means of at least one of the systems and/or products set forth herein. These instructions may be sub-divided into sub-routines and/or stored in one or more files that may be linked statically or dynamically.

The carrier of a computer program may be any entity or device capable of carrying the program. For example, the carrier may include a data storage, such as a ROM, for example, a CD ROM or a semiconductor ROM, or a magnetic recording medium, for example, a hard disk. Furthermore, the carrier may be a transmissible carrier such as an electric or optical signal, which may be conveyed via electric or optical cable or by radio or other means. When the program is embodied in such a signal, the carrier may be constituted by such a cable or other device or means. Alternatively, the carrier may be an integrated circuit in which the program is embedded, the integrated circuit being adapted to perform, or used in the performance of, the relevant method.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A computer-implemented method for generating a personalized virtual user interface for a user, the method comprising:
acquiring (202) information to be delivered to the user;
acquiring (204) data indicative of a preferred communication style of the user;
determining (206) a communication class for the user based on the acquired data, wherein the communication class comprises one or more rules, each of the one or more rules being associated with one of: an amount of the acquired information to deliver to the user and a format in which the acquired information is to be delivered to the user; and
generating (208), based on the determined communication class for the user, a virtual user interface for delivering at least part of the acquired information to the user.

2. A computer-implemented method according to claim 1, wherein the acquired data indicative of a preferred communication style of the user of the user comprises at least one of: an age of the user, a gender of the user, a nationality of the user, a current health condition of the user, a personality type of the user, and a current mood of the user.

3. A computer-implemented method according to claim 1 or claim 2, wherein generating (208) a virtual user interface comprises acquiring a standard virtual user interface and adjusting the standard virtual user interface based on the one or more rules in the determined communication class.

4. A computer-implemented method according to any one of the preceding claims, wherein a rule associated with a format in which the acquired information is to be delivered to the user dictates one of: one or more visual components of the virtual user interface, a tone of voice in which the acquired information is to be delivered to the user, and a level of detail in which the acquired information is to be delivered to the user.

5. A computer-implemented method according to any one of the preceding claims, further comprising receiving a user input, wherein acquiring (202) the information to be delivered to the user comprises generating feedback based on the received user input.

6. A computer-implemented method according to any one of the preceding claims, wherein generating (208) a virtual user interface comprises extracting a part of the acquired information based on the determined communication class, and wherein the generated virtual user interface delivers the extracted part of the acquired information.

7. A computer-implemented method according to any one of the preceding claims, wherein acquiring (204) data indicative of a preferred communication style of the user comprises receiving user input associated with at least one of an interview and a personality test.

8. A computer-implemented method according to any one of the preceding claims, further comprising:
receiving a first user input; and
training, based on the received first user input, a predictive model for determining one or more new rules, wherein the one or more new rules are associated with one of an amount of the acquired information to deliver to the user and a format in which the acquired information is to be delivered to the user.

9. A computer-implemented method according to claim 8, further comprising:
receiving a second user input;
using the predictive model to determine a new rule for the user based on the received second user input, wherein the new rule is associated with one of an amount of the acquired information to deliver to the user and a format in which the acquired information is to be delivered to the user; and
adjusting the virtual user interface based on the determined new rule.

10. A computer-implemented method according to claim 9, further comprising replacing one or more existing rules in the determined communication class for the user with the determined new rule, or adding the determined new rule to the determined communication class.

11. A computer program product comprising a computer readable medium, the computer readable medium having computer readable code embodied therein, the computer readable code being configured such that, on execution by a suitable computer or processor, the computer or processor is caused to perform the method as claimed in any one of the preceding claims.

12. An apparatus (100) for generating a personalized virtual user interface for a user, the apparatus comprising a processor (102) configured to:
acquire information to be delivered to the user;
acquire data indicative of a preferred communication style of the user;
determine a communication class for the user based on the acquired data, wherein the communication class comprises one or more rules, each of the one or more rules being associated with one of an amount of the acquired information to deliver to the user and a format in which the acquired information is to be delivered to the user; and
generate, based on the determined communication class for the user, a virtual user interface for delivering at least part of the acquired information to the user.
